# EUROPÄISCHE PATENTSCHRIFT

(11) **EP 3 024 609 B1**
(45) Veröffentlichungstag und Bekanntmachung des Hinweises auf die Patenterteilung: **24.07.2019**
(21) Anmeldenummer: 14742236.4
(22) Anmeldetag: 24.07.2014
(51) Int. Cl.: B22C 9/10, B29C 67/00, B22C 1/22

(54) **SALZKERNE UND GENERATIVE FERTIGUNGSVERFAHREN ZUR HERSTELLUNG VON SALZKERNEN**
SALT CORES AND ADDITIVE MANUFACTURING METHOD FOR PRODUCING SALT CORES
NOYAUX DE SEL ET PROCÉDÉ DE FABRICATION ADDITIVE POUR RÉALISER DES NOYAUX DE SEL

(30) Priorität: 24.07.2013 DE 102013214467; 10.03.2014 DE 102014204304
(43) Veröffentlichungstag der Anmeldung: 01.06.2016
(73) Patentinhaber: Emil Müller GmbH, 91452 Wilhermsdorf (DE)
(72) Erfinder: HARTIG, Thorsten, 90617 Puschendorf (DE)
(74) Vertreter: Fehrenbacher, Eckhard Anton
(86) Internationale Anmeldenummer: PCT/EP2014/065934
(87) Internationale Veröffentlichungsnummer: WO 2015/011233

(56) Entgegenhaltungen:
- DE-A1- 1 934 787
- DE-A1-102007 023 152
- DE-B3-102005 019 699
- Y. MARUTANI, T. KAMITANI: "Manufacturing sacrificial patterns for casting by salt powder lamination", RAPID PROTOTYPING JOURNAL, Bd. 10, Nr. 5, 2004, Seiten 281-287, XP002730655, DOI: 10.1108/13552540410562313

## Beschreibung

Die Erfindung betrifft Salzkerne als Hohlraumplatzhalter in Gussteilen und/oder Kunststoffformteilen, sowie Verfahren zur Herstellung solcher Salzkerne. Insbesondere betrifft die Erfindung Salzkerne, die mittels generativer Verfahren hergestellt werden können.

Das bevorzugte Einsatzgebiet für solche Salzkerne sind sämtliche Gießverfahren für Leichtmetalle und Buntmetalle, Herstellverfahren für Kunststoffe und/oder kohlefaser- und glasfaserverstärkte Bauteile.

Marutani et al, Rapid Prototyping Journal Bd 10, 2004 S. 281-287 offenbart Opferstrukturen aus Salz zur Herstellung von Gussteilen, wobei die Opferstruktur einem schichtweisen Aufbau aus einzeln aufgebrachten und verfestigten Schichten eines Formstoffs aufweist.

DE 102005019699 B3 offenbart ein 3D-Druckverfahren zur Herstellung von Salzkernen aus einer Mischung aus NaCI und MgSO₄, wobei auf Bindemittel verzichtet wird, um ein Ausgasen des Bindemittels zu verhindern.

DE 19 34 787 A1 zeigt einen wasserlöslichen Salzkern für Gießereizwecke, dessen Salzkernmasse einen Kunstharzbinder und Wasserglas enthält.

DE 10 2007 023152 A1 beschreibt ein Verfahren zur Herstellung eines Gussteils über eine Negativform.

Im Rahmen dieser Erfindung werden unter Gussteilen nicht nur metallische, sondern auch alle anderen Bauteile, die durch Gießen oder Spritzgießen oder ähnliche Verfahren hergestellt werden und einen Gießkern benötigen umfasst. Insbesondere sollen auch spritzgegossene Kunststoffteile von diesem Begriff umfasst sein.

Bei vielen durch Gießen hergestellten Produkten ist es erforderlich Hohlräume im Inneren oder Hinterschneidungen im Außenbereich zu erzeugen. Bei den drucklosen Verfahren, wie beispielsweise dem Schwerkraftgießen, wird ein Kern aus verfestigtem Sand oder Salz innerhalb der Form positioniert und mit Metallschmelze umgossen. Dabei wird die Gießform gefüllt und der Kern mit Schmelze umschlossen.

Trockengepresste Salzkerne sind im Gießereiweisen seit Jahrzehnten im Einsatz. Dieses bekannte Fertigungsverfahren kommt für Produkte mit einfachen Geometrien zum Einsatz.

Ein weiteres Herstellungsverfahren für Salzkerne ist das Kernschießen. Durch Kernschießen können Salzkerne mit wesentlich komplexeren Geometrien prozesssicher hergestellt werden. Beide Verfahren, also das Trockenpressen und das Kernschießen, weisen den Nachteil auf, dass immer ein Urformwerkzeug benötigt wird. Die Herstellung von Urformwerkzeugen ist aufwendig, zeitintensiv und kostspielig. Weiterhin unterliegen Urformwerkzeuge einem Fertigungsverschleiß.

Außerdem ist eine Produktion von einteiligen Formen und Kernen mit hinterschnittigen Konturen formtechnisch nicht möglich.

Die Herstellung gepresster Kerne mit komplexen Geometrien ist nicht in einem Vorgang möglich, sondern kann nur durch nachgelagerte Prozessschritte erreicht werden.

Aufgabe der Erfindung ist die die Bereitstellung von Salzkernen mit komplexen Geometrien sowie eines Verfahrens zur Herstellung solcher Salzkerne.

Diese Aufgabe wird mit Salzkernen gemäß Anspruch 1 und einem Verfahren nach Anspruch 5 gelöst. Vorteilhafte Weiterbildungen des Gegenstands der Erfindung sind den Unteransprüchen zu entnehmen.

Demgemäß zeichnet sich ein erfindungsgemäßer Salzkern dadurch aus, dass er einen schichtweisen Aufbau aufweist. Dieser schichtweise Aufbau besteht aus oder umfasst einzeln aufgebrachte und verfestigte Schichten eines Formstoffs.

Ein erfindungsgemäßes Verfahren zur Herstellung von Salzkernen unterscheidet sich von aus dem Stand der Technik bekannten Verfahren dadurch, dass die Salzkerne ohne die Verwendung von Urformwerkzeugen hergestellt werden können, indem schichtweise aufgebrachte Salzpartikel durch selektives Auftragen/Aufsprühen von Binder miteinander verbunden werden.

Gemäß einer besonders bevorzugten Ausführungsform der Erfindung sind die Salzkerne in einem Lösungsmittel löslich und insbesondere wasserlöslich.

Die erfindungsgemäßen Kerne umfassen einen Formstoff, umfassend kristalline Salzpartikel, Binder sowie ggf. Hilfsstoffe wie Füllstoffe, Additive, Benetzungsmittel, Härter und Katalysatoren.

Die Salzkerne werden mittels eines generativen Fertigungsverfahrens hergestellt. Besonders bevorzugt wird das Verfahren des 3D - Druckens von Salz, bei welchem die Salzpartikel lokal, dem 3D-Datenmodell entsprechend, mit einer Binderflüssigkeit oder einem Härter verfestigt werden. In diesem Verfahren sind die Vorteile des Kernschießens und Trockenpressens miteinander verknüpft.
- Eine hohe Komplexität der Form/des Kerns ist durch den schichtenweisen Aufbau realisierbar; ebenso ist es möglich hohle Strukturen zu generieren.
- Für das 3D-Drucken der Salzkerne können kostengünstige und biologisch/ökologisch im Wesentlichen unbedenkliche Salze verwendet werden.
- Der Aufbau der einzelnen Salzpartikel zu einem Salzkern oder einer Form erfolgt hierbei durch ein computergesteuertes, selektives Aufsprühen/Auftragen von Binder oder Härter auf eine dünne Formstoffschicht, die auf einen Träger aufgebracht ist. Nach Verfestigung der Schicht, wird der Träger verfahren/abgesenkt und eine neue Formstoffschicht aufgebracht und wiederum mittels Binders/Härters verfestig. Für jede neu aufgetragene Formstoffschicht muss der selektive Auftrag des Binders wiederholt werden.
- Durch den schichtenweisen Aufbau und das lokale Auftragen des Binders entsteht kein Verzug am Bauteil.
- Die Porosität/Gasdurchlässigkeit der erzeugten Kerne/Formen kann gezielt eingestellt werden.
- Leichte und rückstandsfreie Entfernung der Kerne, da die Kerne ausschließlich aus wasserlöslichen Komponenten bestehen können.
- Hohe Flexibilität und Geschwindigkeit bei Kleinserien und Prototypen
- Keine Werkzeugkosten

Für die hier beschriebenen Salzkerne wird kristallines Salz als Formstoff verwendet. Das kristalline Salz weist eine bi- oder multimodale Korngrößenverteilung auf. Eine bi- oder multimodale Korngrößenverteilung ist vorteilhaft in Hinblick auf eine besonders dichte Packung der Kristalle. Die in den erfindungsgemäßen Salzkernen vorhandene Porosität kann somit variiert werden. Die erfindungsgemäßen Salzkerne weisen eine Restporosität von weniger als 30%, bevorzugt von weniger als 5% und insbesondere bevorzugt von weniger als 2% bezogen auf das Gesamtvolumen des Salzkerns auf.

Wesentliche Auswahlkriterien für die zu verwendenden Salze sind deren Giftigkeit und Löslichkeit.

Es können beispielsweise Chloride, Sulfate, Phosphate oder Nitrate der Alkali-, Erdalkali- oder der Nebengruppenelemente oder Mischungen dieser Salze, insbesondere Natriumchlorid, Kaliumchlorid, Magnesiumchlorid und/oder Kaliumsulfat, Magnesiumsulfat, Ammoniumsulfat, Natriumsulfat als Salze bzw. Formstoff eingesetzt werden.

Ein erfindungsgemäßes Verfahren zur Herstellung solcher Salzkerne zeichnet sich dadurch aus, dass die Salzformen und Salzkerne schichtweise aufgebaut werden.

Gemäß einer bevorzugten Ausführungsform der Erfindung kann der Salzkern hohl gestaltet sein, wobei das Innere des Salzkerns leer sein oder gefüllt sein kann. Der hohle Salzkern kann bevorzugt mit dem unverfestigten Formstoff gefüllt sein.

Besonders bevorzugt besteht der Salzkern aus einer generativ erzeugten, verfestigten Randschale, währenddessen der von der verfestigten Randschale umschlossene, innere Formstoffanteil nicht verfestigt ist.

Der durch 3D-Drucken hergestellte Salzkern kann, zum Schließen oberflächennaher, offener Poren, mit einer wasserlöslichen Schlichte überzogen oder mit einer Salzschmelze infiltriert werden.

Es wurde gefunden, dass es möglich ist, eine Vielzahl von Funktionsteilen, die zur Herstellung von beispielsweise Getrieben, Antriebselementen, Pumpen, Kanälen und Rohrsystemen dienen, nicht erst nach Herstellung eines Hohlformkörpers in diesen einzubringen und zu montieren, sondern sie in einen wasserlöslichen Salzkern einzubringen, der sodann in einem Gießverfahren mit Metall oder Kunststoff umgossen wird. Nachfolgend wird der wasserlösliche Salzkern ausgespült und die Funktionsteile liegen bereits in der gewünschten Position und Funktion im Hohlformkörper vor.

Ein solcher Salzkern umfasst ein Bauteil, insbesondere ausgewählt aus Zahnrädern, Getriebeteilen, Achselementen oder Antriebselementen so in formschlüssiger Verbindung, dass beim Umguss kein Hintergießen mit Schmelze und keine Flitterbildung auftreten. Das Bauteil ist dabei ganz oder teilweise vom Salzkern umschlossen. In der Regel ragen aus dem Salzkern lediglich die Achsen oder Achslager hervor oder liegen an der Oberfläche des Salzkerns an.

Weiterhin zeichnet sich das erfindungsgemäße Verfahren dadurch aus, dass der Formstoff ein pulverförmiges, körniges oder granuliertes Salz oder eine Mischung von Salzen mit runden, unregelmäßig geformten oder eckigen, splittrigen Kristallen ist.

Gemäß einer bevorzugten Ausführungsform der Erfindung liegt die Korngröße des kristallinen Salzes im Bereich von 0,01 mm bis 2 mm. Besonders bevorzugte Korngrößenbereiche liegen zwischen 0,01 bis 0,29 mm, zwischen 0,3 bis 1,3 mm und/oder zwischen 1,31 bis 2,0 mm, wobei die ersten beiden Fraktionen als eher feinkörniges Salz und die letzte Fraktion als eher grobkörniges Salz in multimodal zusammengesetzten Mischungen Verwendung finden können.

In einer weiteren Ausführungsform der Erfindung wird der Formstoff schichtweise aufgetragen und mit einem kalt-, warm- oder heißhärtenden Binder beaufschlagt. Besonders bevorzugt wird der Formstoff mit dem Binder besprüht, so dass der Formstoff zu einem Salzkern/Körper entsprechend dem vorgegebenen Datenmodell verbunden wird. Der Binder wird ausgehärtet.

Ein weiteres bevorzugtes Verfahren sieht vor, dass der Formstoff, also insbesondere die kristallinen Salzpartikel, mit einem Härter umhüllt ist. Dieser mit einem Härter umhüllte Formstoff wird dann schichtweise auf einen Träger aufgetragen und mit einem Binder beaufschlagt. Auch hier umfasst die Beaufschlagung insbesondere das Besprühen mit einem Binder in vom Datenmodell vorgegebenen Bereichen.

Besonders bevorzugt können als Binder Harze aus der Gruppe der Phenol-, der Phenol-Harnstoff-Formaldehyd-, der stickstofffreien oder stickstoffarmen Phenol-Formaldehyd-, der furfurylalkoholhaltigen Phenol-, Furfurylalkohol-Harnstoff-Formaldehyd-, der Furan-, der phenol-modifizierten Furan-, der Amino-Harze, der Novolake oder der Resole verwendet werden, die flüssig oder fest eingesetzt werden können.

Eine weitere bevorzugte Ausführungsform sieht als Binder wasserlösliche Silikatverbindungen, insbesondere Wassergläser, vor. Es können Wassergläser mit einem Wasserglasmodul von 1 bis 5 und/oder eine Mischung von Wassergläsern mit verschiedenen Wasserglasmodulen verwendet werden.

Wird ein zusätzlicher Härter verwendet, so liegt dessen Anteil vorzugsweise zwischen 0,5 und 30 Gew.-%, besonders bevorzugt zwischen 0,5 und 15 Gew.-%, bezogen auf die Masse des Binders.

Um eine komplette Aushärtung der so erzeugten Salzkerne oder auch eine Ausgasung von volatilen Bestandteilen von Binder und/oder Härter zu erreichen, kann es in bestimmten Fällen vorteilhaft sein, die Salzkerne in einem Ofen nach zu härten.

Zusammenfassend kann ein erfindungsgemäßes Verfahren nach dem besonders bevorzugten 3D-Drucken wie folgt aussehen, d.h. die folgenden Schritte umfassen:
- Erzeugen eines Datenmodells des herzustellenden Salzkerns;
- Aufbereiten eines Formstoffs aus Salzpartikeln, ggf. einem Binder und/oder ggf. einem Härter;
- Aufbringen einer dünnen Formstoffschicht auf einen verfahrbaren Träger;
- computergesteuertes Besprühen der Formstoffschicht mit einem Härter und/oder einem Binder in dem Datenmodell entsprechenden Bereichen;
- Verfahren des Trägers;
- erneutes Auftragen einer Formstoffschicht und Besprühen der Formstoffschicht, bis der erzeugte Salzkern dem Datenmodell entspricht;
- ggf. Nachhärten des Salzkerns in einem Ofen.

## Patentansprüche

1. Salzkern als Hohlraumplatzhalter zur Herstellung von Gussteilen, wobei der Salzkern einen schichtweisen Aufbau aufweist, wobei der schichtweise Aufbau aus einzeln aufgebrachten und verfestigten Schichten eines Formstoffs besteht, wobei der Formstoff kristallines Salz und einen Binder umfasst, **dadurch gekennzeichnet, dass** das kristalline Salz in einer bimodalen oder einer multimodalen Korngrößenverteilung enthalten ist, wobei das kristalline Salz insbesondere Korngrößen von 0,01 bis 0,29 mm, 0,3 bis 1,3 mm und/oder 1,31 bis 2,0 mm aufweist.

2. Salzkern nach Anspruch 1, **dadurch gekennzeichnet, dass** der Salzkern mindestens ein Bauteil, insbesondere ausgewählt aus Zahnrädern, Getriebeteilen, Achselementen oder Antriebselementen so in formschlüssiger Verbindung enthält, dass beim Umguss kein Hintergießen mit Schmelze und keine Flitterbildung auftreten, wobei das Bauteil ganz oder teilweise vom Salzkern umschlossen ist.

3. Salzkern nach Anspruch 1 oder 2, **dadurch gekennzeichnet, dass** der Salzkern hohl ist, wobei das Innere des Salzkerns leer sein oder mit unverfestigtem Formstoff gefüllt sein kann.

4. Salzkern nach einem der vorstehenden Ansprüche, **dadurch gekennzeichnet, dass** der Salzkern mit einer wasserlöslichen Schlichte überzogen ist oder mit einer wasserlöslichen Salzschmelze infiltriert ist.

5. Verfahren zur Herstellung von Salzkernen, wobei die Salzkerne mittels eines generativen Fertigungsverfahrenshergestellt werden, wobei die Salzkerne aus einem Formstoff hergestellt werden und als Formstoff kristallines Salz, verwendet wird, wobei der Formstoff kristallines Salz und einen Binder umfasst, **dadurch gekennzeichnet, dass** das kristalline Salz in einer bimodalen oder einer multimodalen Korngrößenverteilung enthalten ist, wobei das kristalline Salz insbesondere Korngrößen von 0,01 bis 0,29 mm, 0,3 bis 1,3 mm und/oder 1,31 bis 2,0 mm aufweist.

6. Verfahren nach Anspruch 5, **dadurch gekennzeichnet, dass** der Formstoff schichtweise aufgetragen und mit einem kalt-, warm- oder heißhärtenden Binder beaufschlagt, insbesondere besprüht, wird, und der Binder anschließend ausgehärtet wird.

7. Verfahren nach Anspruch 6, **dadurch gekennzeichnet, dass** als Binder ein Harz aus der Gruppe der Phenol-, der Phenol-Harnstoff-Formaldehyd-, der stickstofffreien oder stickstoffarmen Phenol-Formaldehyd-, der furfurylalkoholhaltigen Phenol-, Furfurylalkohol-Harnstoff-Formaldehyd-, der Furan-, der phenol-modifizierten Furan-, der Amino-Harze, der Novolake oder der Resole verwendet wird, welches entweder flüssig oder fest eingesetzt werden kann.

8. Verfahren nach Anspruch 6, **dadurch gekennzeichnet, dass** der Binder wasserlösliche Silikatverbindungen, vorzugsweise Wassergläser, insbesondere Wasserglas mit einem Wasserglasmodul von 1 bis 5 und/oder eine Mischung von Wassergläsern mit verschiedenen Wasserglasmodulen, umfasst.

9. Verfahren nach Anspruch 8, **dadurch gekennzeichnet, dass** der Anteil des Härters zwischen 0,5 und 30 Gew.-%, bevorzugt zwischen 0,5 und 15 Gew.-%, bezogen auf die Masse des Binders liegt.

10. Verfahren nach einem der Ansprüche 5 bis 9, **dadurch gekennzeichnet, dass** nur eine Randschale verfestigt wird, so dass der entstehende Salzkern hohl ist.

11. Verfahren nach einem der Ansprüche 5 bis 10, **dadurch gekennzeichnet, dass** der erzeugte Salzkern in einem Ofen nachgehärtet wird.

12. Verfahren nach einem der Ansprüche 5 bis 11, **dadurch gekennzeichnet, dass** das Verfahren zum 3D-Drucken von Salzkernen die folgenden Schritte umfasst:
- Erzeugen eines Datenmodells des herzustellenden Salzkerns;
- Aufbereiten eines Formstoffs aus Salzpartikeln, ggf. einem Binder und/oder ggf. einem Härter;
- Aufbringen einer dünnen Formstoffschicht auf einen verfahrbaren Träger;
- computergesteuertes Besprühen der Formstoffschicht mit einem Härter oder einem Binder in dem Datenmodell entsprechenden Bereichen;
- Verfahren der Trägerplatte;
- erneutes Auftragen einer Formstoffschicht und Besprühen der Formstoffschicht, bis der erzeugte Salzkern dem Datenmodell entspricht;
- ggf. Nachhärten des Salzkerns in einem Ofen.

## Claims

1. Salt core as a cavity spacer for producing castings, the salt core having a layered structure, the layered structure consisting of individually applied and solidified layers of a molding material, the molding material comprising crystalline salt and a binder, **characterized in that** the crystalline salt is contained in a bimodal or a multimodal grain size distribution, the crystalline salt in particular having grain sizes of 0.01 to 0.29 mm, 0.3 to 1.3 mm and/or 1.31 to 2.0 mm.

2. Salt core according to claim 1, **characterized in that** the salt core contains at least one component, in particular selected from gear wheels, gear parts, axle elements or drive elements, in an interlocking connection such that no back-casting with melt and no flake formation occur during casting, the component being completely or partially enclosed by the salt core.

3. Salt core according to either claim 1 or claim 2, **characterized in that** the salt core is hollow, it being possible for the interior of the salt core to be empty or filled with an unsolidified molding material.

4. Salt core according to any of the preceding claims, **characterized in that** the salt core is coated with a water-soluble coating or is infiltrated with a water-soluble molten salt.

5. Method for producing salt cores, the salt cores being produced by means of an additive manufacturing method, the salt cores being produced from a molding material and crystalline salt being used as the molding material, the molding material comprising crystalline salt and a binder, **characterized in that** the crystalline salt is contained in a bimodal or a multimodal grain size distribution, the crystalline salt in particular having grain sizes of 0.01 to 0.29 mm, 0.3 to 1.3 mm and/or 1.31 to 2.0 mm.

6. Method according to claim 5, **characterized in that** the molding material is applied layer by layer and is acted upon by, in particular sprayed with, a cold, warm or hot-curing binder, and the binder is subsequently cured.

7. Method according to claim 6, **characterized in that** a resin from the group of phenol resins, phenol-urea-formaldehyde resins, nitrogen-free or low-nitrogen phenol-formaldehyde resins, furfuryl alcohol-containing phenol resins, furfuryl alcohol-urea-formaldehyde resins, furan resins, phenol-modified furan resins, amino resins, novolaks, or resols, is used as a binder, which resin can be used either in liquid or solid form.

8. Method according to claim 6, **characterized in that** the binder comprises water-soluble silicate compounds, preferably water glasses, in particular water glass having a water glass modulus of 1 to 5 and/or a mixture of water glasses having different water glass moduli.

9. Method according to claim 8, **characterized in that** the proportion of the curing agent is between 0.5 and 30 wt.%, preferably between 0.5 and 15 wt.%, based on the mass of the binder.

10. Method according to any of claims 5 to 9, **characterized in that** only an outer shell is solidified such that the resulting salt core is hollow.

11. Method according to any of claims 5 to 10, **characterized in that** the salt core produced is post-cured in a furnace.

12. Method according to any of claims 5 to 11, **characterized in that** the method for 3D printing salt cores comprises the following steps:
- producing a data model of the salt core to be produced;
- preparing a molding material from salt particles, optionally a binder and/or optionally a curing agent;
- applying a thin layer of molding material to a movable carrier;
- spraying, in a computer-controlled manner, the molding material layer with a curing agent or a binder in regions corresponding to the data model;
- moving the carrier plate;
- re-applying a molding material layer and spraying the molding material layer until the salt core produced corresponds to the data model;
- optionally post-curing the salt core in a furnace.

## Revendications

1. Noyau de sel comme dispositif de maintien de cavité pour la fabrication de pièces coulées, le noyau de sel présentant une structure en couches, la structure en couches étant constituée de couches d'un matériau de moulage appliquées individuellement et solidifiées, le matériau de moulage comprenant un sel cristallin et un liant, **caractérisé en ce que** le sel cristallin est présent dans une distribution granulométrique bimodale ou multimodale, le sel cristallin présentant en particulier une granulométrie de 0,01 à 0,29 mm, de 0,3 à 1,3 mm et/ou de 1,31 à 2,0 mm.

2. Noyau de sel selon la revendication 1, **caractérisé en ce qu'**il contient au moins un composant, en particulier choisi parmi des roues dentées, des pièces d'engrenage, des éléments d'essieu ou des éléments d'entraînement, en liaison par complémentarité de forme, de telle sorte qu'aucun scellement ne se produise avec la masse fondue et qu'aucune formation de paillettes pendant le surmoulage, le composant étant entièrement ou partiellement entouré par le noyau de sel.

3. Noyau de sel selon la revendication 1 ou 2, **caractérisé en ce qu'**il est creux, l'intérieur du noyau de sel pouvant être vide ou rempli de matériau de moulage non solidifié.

4. Noyau de sel selon l'une des revendications précédentes, **caractérisé en ce qu'**il est revêtu d'un produit d'encollage hydrosoluble ou est infiltré par un sel fondu hydrosoluble.

5. Procédé de fabrication de noyaux de sel, dans lequel les noyaux de sel sont produits selon un procédé de fabrication génératif, les noyaux de sel étant fabriqués à partir d'un matériau de moulage et un sel cristallin étant utilisé comme matériau de moulage, le matériau de moulage comprenant un sel cristallin et un liant, **caractérisé en ce que** le sel cristallin est présent dans une distribution granulométrique bimodale ou multimode, le sel cristallin présentant en particulier une granulométrie de 0,01 à 0,29 mm, de 0,3 à 1,3 mm et/ou de 1,31 à 2,0 mm.

6. Procédé selon la revendication 5, **caractérisé en ce que** le matériau de moulage est appliqué en couches et est exposé, en particulier par pulvérisation, à un liant durcissable à froid ou thermodurcissable, et **en ce que** le liant est ensuite durci.

7. Procédé selon la revendication 6, **caractérisé en ce que** l'on utilise comme liant une résine du groupe des résines de phénol, des résines de phénol-urée-formaldéhyde, des résines de phénol-formaldéhyde sans azote ou pauvre en azote, des résines de phénol-formaldéhyde contenant de l'alcool furfurylique, des résines d'alcool furfurylique-urée-formaldéhyde, des résines de furanne, des résines de furanne modifiées au phénol, des résines amino, des novolaques ou des résols, laquelle résine peut être utilisée sous forme liquide ou solide.

8. Procédé selon la revendication 6, **caractérisé en ce que** le liant comprend des composés de silicate hydrosolubles, de préférence des verres solubles, en particulier du verre soluble présentant un module de verre soluble de 1 à 5 et/ou un mélange de verres solubles présentant différents modules de verre soluble.

9. Procédé selon la revendication 8, **caractérisé en ce que** la proportion du durcisseur est comprise entre 0,5 et 30 % en poids, de préférence entre 0,5 et 15 % en poids, par rapport à la masse du liant.

10. Procédé selon l'une des revendications 5 à 9, **caractérisé en ce qu'**une seule coque marginale est solidifiée de sorte que le noyau de sel qui en résulte est creux.

11. Procédé selon l'une des revendications 5 à 10, **caractérisé en ce que** le noyau de sel obtenu est post-durci dans un four.

12. Procédé selon l'une des revendications 5 à 11, **caractérisé en ce que** le procédé d'impression 3D de noyaux de sel comprend les étapes suivantes :
- génération d'un modèle de données du noyau de sel à produire ;
- préparation d'un matériau de moulage à partir de particules de sel, éventuellement d'un liant et/ou d'un durcisseur ;
- application d'une fine couche de matériau de moulage sur un support mobile ;
- pulvérisation commandée par ordinateur de la couche de matériau de moulage avec un durcisseur ou un liant dans les zones correspondant au modèle de données ;
- déplacement de la plaque de support ;
- application d'une nouvelle couche de matériau de moulage et pulvérisation de la couche de matériau de moulage jusqu'à ce que le noyau de sel produit corresponde au modèle de données ;
- éventuellement, post-cuisson du noyau de sel dans un four.
